# EUROPEAN PATENT APPLICATION

(11) **EP 4 668 441 A1**
(43) Date of publication of application: **24.12.2025**
(21) Application number: 25178749.5
(22) Date of filing: 26.05.2025
(51) Int. Cl.: H01M 50/249

(54) **BATTERY ENCLOSURE HAVING UNIVERSAL FITMENT CAPABILITY IN ELECTRICAL GOLF CARTS, AND METHODS OF MAKING AND USING THE SAME**

(30) Priority: 28.05.2024 US 202463652372 P
(71) Applicant: Trojan Battery Company LLC, Santa Fe Springs, CA 90670 (US)
(72) Inventor: MASON, Mike, Santa Fe Springs, 90670 (US); LACY, John, Santa Fe Springs, 90670 (US); NEWSOME, Rick, Santa Fe Springs, 90670 (US)
(74) Representative: Ter Meer Steinmeister & Partner

(57) **Abstract**

A universal battery enclosure, a resulting battery pack assembly, and the methods of making and using the same are provided. A method is also provided to a battery for a plurality of different golf carts. Information is provided on dimensions and configurations of battery holders in the plurality of different golf carts. Each golf cart has a battery holder, which has a respective dimension and configuration. A battery having a battery enclosure with predetermined dimension is provided based on the information on the dimensions and configurations of the battery holders of different golf carts. The battery is the only type of battery and is configured to fit into different battery holders. The battery may be a lithium ion battery.

## Description

### PRIORITY CLAIM AND CROSS-REFERENCE

This application claims the benefit of U.S. Provisional Application No. 63/652,372, filed May 28, 2024, which application is expressly incorporated by reference herein in its entirety.

### FIELD OF THE INVENTION

The disclosure relates to batteries generally. More particularly, the disclosed subject matter relates to a battery enclosure for a battery pack such as Li-ion battery pack used in electrical golf cars, and methods of making and using the same.

### BACKGROUND

Lithium-ion (Li-ion) batteries have become increasingly used as traction batteries in battery-powered equipment, including, without limitation, electric vehicles (EVs) due to their advantages of high energy density, low self-discharge, and long cycle life.

A golf cart is used to transport player and golf bag on a golf course. Most of these golf carts are electrically powered or internal-combustion engine powered. However, different manufactures of golf carts have different designs and dimensions for the battery compartments. The battery manufacturers generally make and supply different batteries of different sizes to specifically match with corresponding designs and dimensions.

### SUMMARY OF THE INVENTION

The present disclosure provides a universal battery enclosure, a resulting battery pack assembly, and the methods of making and using the same.

In accordance with some embodiments, the present disclosure provides a method for providing a battery (or battery pack) for a plurality of different golf carts. Information is provided on dimensions and configurations of battery holders in the plurality of different golf carts. Each golf cart has a battery holder, which has a respective dimension and configuration. A battery having a battery enclosure with predetermined dimensions including a length, a width and a height is provided based on the information on the dimensions and configurations of the battery holders of different golf carts. The battery is the only type of battery and is configured to fit into different battery holders of different golf carts. The battery may be a lithium ion battery in some embodiments.

The battery may comprise a plurality of battery cells disposed inside the battery enclosure. Each cell may be a lithium ion battery cell. The plurality of battery cells may be connected in series or parallel. The plurality of battery cells may be aligned in parallel with each other.

In some embodiments, the battery further comprises a battery management system (BMS) electronically connected with the plurality of battery cells. The BMS may be disposed inside the battery enclosure and/or above the plurality of battery cells.

The battery may be the only one battery with specific dimensions. In some embodiments, the height of the battery enclosure is in a range of from 20 cm to 30 cm, the width of the battery enclosure is in a range of from 20.3 cm to 36.8 cm, and/or the length of the battery enclosure is in a range of from 54.6 cm to 91.4 cm.

In some embodiments, in one example, the height of the battery enclosure is 28.6 cm, the width of the battery enclosure is 20.3 cm, and/or the length of the battery enclosure is 54.6 cm. With a flange, the width of the battery enclosure may be 24.4 cm, and/or the length of the battery enclosure may be 58.6 cm.

In some embodiments, in another example, the height of the battery enclosure is 22.5 cm, the width of the battery enclosure is 32.4 cm, and/or the length of the battery enclosure is 49.0 cm. With a flange, the width of the battery enclosure may be 36.4 cm, and/or the length of the battery enclosure is 53.0 cm.

In some embodiments, the method further comprises providing a set of brackets disposed below the battery enclosure. The set of bracket may be adjustable to match with fixtures on each battery holder so as to fix the battery in each battery holder.

In some embodiments, the battery enclosure is made of a suitable material. Examples of such suitable materials for the battery enclosure include, but are not limited to sheet metals, a plastics, and any combination thereof. The battery enclosure optionally comprises a transparent top cover. The battery components inside the enclosure can be seen from the top cover. A pair of handles may be disposed on the top cover.

In another aspect, the present disclosure provides a battery assembly for a plurality of different golf carts. The battery assembly comprises a battery (or battery pack), which comprises a battery enclosure, and a plurality of battery cells disposed inside the battery enclosure. Each of the plurality of different golf carts has a battery holder and each battery holder has a respective dimension and configuration. The battery is the only one battery and is configured to fit into each battery holder in the plurality of different golf carts. The battery enclosure has predetermined dimensions including a length, a width, and a height.

In some embodiments, the battery is a lithium ion battery. The plurality of battery cells may be connected in series or parallel. The plurality of battery cells may be aligned in parallel with each other.

In some embodiments, the battery assembly further comprises a battery management system electronically connected with the plurality of battery cells.

In some embodiments, the battery assembly further comprises a set of brackets disposed below the battery enclosure. The set of bracket may be adjustable to match with fixtures on each battery holder so as to fix the battery in each battery holder.

In some embodiments, the height of the battery enclosure is in a range of from 20 cm to 30 cm, the width of the battery enclosure is in a range of from 20.3 cm to 36.8 cm, and/or the length of the battery enclosure is in a range of from 54.6 cm to 91.4 cm.

In one example, the height of the battery enclosure is 28.6 cm, the width of battery enclosure is 20.3 cm, and/or the length of the battery enclosure is 54.6 cm. With a flange, the width of battery enclosure may be 24.4 cm, and/or the length of the battery enclosure may be 58.6 cm.

In another example, the height of the battery enclosure is 22.5 cm, the width of battery enclosure is 32.4 cm, and/or the length of the battery enclosure is 49.0 cm. With a flange, the width of battery enclosure may be 36.4 cm, and/or the length of the battery enclosure is 53.0 cm.

In some embodiments, the battery enclosure is made of sheet metals or a plastics, and optionally comprises a transparent top cover as described herein.

In another aspect, the present disclosure provides a method of making the battery assembly as described herein. Such a method includes steps of providing or making each component, and assembling them together. The components may at least comprise the battery.

In another aspect, the present disclosure also provides a method of using the battery assembly as described herein. The method of using the battery assembly comprises installing the battery into a battery holder in a golf cart.

In another aspect, the present disclosure also provides a golf cart. The golf cart may comprise any one of the herein disclosed batteries and/or battery assemblies.

### BRIEF DESCRIPTION OF THE DRAWINGS

The present disclosure is best understood from the following detailed description when read in conjunction with the accompanying drawings. It is emphasized that, according to common practice, the various features of the drawings are not necessarily to scale. On the contrary, the dimensions of the various features are arbitrarily expanded or reduced for clarity. Like reference numerals denote like features throughout specification and drawings.
FIGS. 1A-1E are cross-sectional views illustrating five exemplary battery holders of different golf carts and corresponding requirements for a height of a battery.
FIGS. 2A-2E are cross-sectional views illustrating the five exemplary battery holders of different golf carts and corresponding requirements for a width of a battery.
FIGS. 3A-3D are cross-sectional views illustrating the five exemplary battery holders of different golf carts and corresponding requirements for a length of a battery. FIG. 3D shows the length requirements for two different golf carts.
FIGS. 4A-4E are cross-sectional views illustrating one exemplary battery mounted in the five exemplary battery holders of different golf carts in accordance with some embodiments. FIGS. 4A-4E show the height and the width of the exemplary battery.
FIGS. 5A-5D are cross-sectional views illustrating the same exemplary battery mounted in the five exemplary battery holders of different golf carts. FIG. 5D shows the length of the exemplary battery for two different golf carts.
FIG. 6 is a top plan view illustrating an exemplary battery enclosure in accordance with some embodiments.
FIG. 7 is a perspective view illustrating the exemplary battery enclosure of FIG. 6 in accordance with some embodiments.
FIGS. 8-10 are plan views illustrating the exemplary battery enclosure of FIG. 6 along a width direction, a length direction, a width direction, respectively, in accordance with some embodiments. FIG. 8 and FIG. 10 show different ends of the exemplary battery enclosure.
FIGS. 11A-11D illustrate an exemplary battery enclosure made of a sheet metal and having a transparent cover in accordance with some embodiments.
FIGS. 12A-12B are top plan view illustrating the components inside the exemplary battery enclosure of FIGS. 11A-11D, without the cover or with a transparent cover, in accordance with some embodiments.
FIGS. 13A-13B are perspective views illustrating the exemplary battery of FIGS. 11A-11D with a transparent top cover in accordance with some embodiments.
FIGS. 14A-14B are a top plan view and a side plan view illustrating the exemplary battery of FIGS. 11A-11D installed in the first exemplary battery holder in accordance with some embodiments.
FIG. 15A-15D illustrate an exemplary battery enclosure made of a plastics material in accordance with some embodiments.
FIG. 16 is a plan view illustrating the configuration of battery cells inside the exemplary battery enclosure of FIGS. 15A-15D in accordance with some embodiments.

### DETAILED DESCRIPTION

This description of the exemplary embodiments is intended to be read in connection with the accompanying drawings, which are to be considered part of the entire written description. In the description, relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

For purposes of the description hereinafter, it is to be understood that the embodiments described below may assume alternative variations and embodiments. It is also to be understood that the specific articles, compositions, and/or processes described herein are exemplary and should not be considered as limiting.

In the present disclosure the singular forms "a," "an," and "the" include the plural reference, and reference to a particular numerical value includes at least that particular value, unless the context clearly indicates otherwise. When values are expressed as approximations, by use of the antecedent "about," it will be understood that the particular value forms another embodiment. As used herein, "about X" (where X is a numerical value) preferably refers to ±10% of the recited value, inclusive. For example, the phrase "about 8" preferably refers to a value of 7.2 to 8.8, inclusive. Where present, all ranges are inclusive and combinable. For example, when a range of "1 to 5" is recited, the recited range should be construed as including ranges "1 to 4", "1 to 3", "1-2", "1-2 & 4-5", "1-3 & 5", "2-5", and the like. In addition, when a list of alternatives is positively provided, such listing can be interpreted to mean that any of the alternatives may be excluded, e.g., by a negative limitation in the claims. For example, when a range of "1 to 5" is recited, the recited range may be construed as including situations whereby any of 1, 2, 3, 4, or 5 are negatively excluded; thus, a recitation of "1 to 5" may be construed as "1 and 3-5, but not 2", or simply "wherein 2 is not included." It is intended that any component, element, attribute, or step that is positively recited herein may be explicitly excluded in the claims, whether such components, elements, attributes, or steps are listed as alternatives or whether they are recited in isolation.

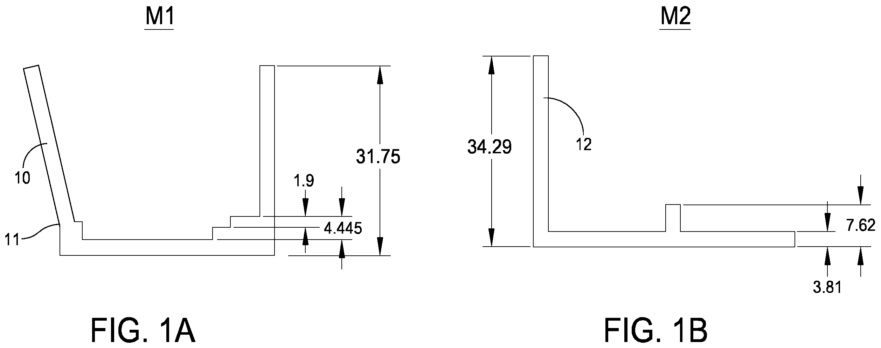

In FIGS. 1A-16, like items are indicated by like reference numerals, and for brevity, descriptions of the structure, provided above with reference to the preceding figures, are not repeated. The methods described herein are described with reference to the exemplary structure described in FIGS. 1A-16.

The present disclosure provides a universal battery enclosure, a resulting battery pack assembly, and the methods of making and using the same. In accordance with some embodiments, the present disclosure provides a battery enclosure with a design for a lithium battery pack that allows for universal fitment to a plurality of different golf cart models, years, and/or manufacturers.

It was identified that the golf cart battery competitors had a variety of battery products of varying shapes/sizes to meet a wide range of fitment needs for existing golf carts.

In the present disclosure, having a single solution that meets the needs of the entire market was identified as a product differentiator that would be a competitive advantage due to simplified ordering by the end user. The methods and the products provided in the present disclosure are used to simplify end user ordering by a single battery working for all golf cart configurations, and also eliminates the need for a full battery compartment replacement in some golf cart configurations, which is necessary for competitive products.

The methods and the products provided in the present disclosure have many advantages. For example, only a single battery installation is needed. In the existing technologies, many different batteries are needed in existing configurations. One specific battery of specific size is needed to match with one battery holder of one specific golf cart. The present disclosure provides an easy solution, which simplifies end user ordering due to a universal fitment. No selection among different batteries of different sizes and configurations is needed.

In some embodiments, an adjustable bracket fixture is provided to easily fit the battery including the enclosure of one same size into different existing golf carts. The installation may be easily performed by an end user.

The present disclosure provides a universal battery enclosure, a resulting battery pack assembly, and the methods of making and using the same.

In accordance with some embodiments, the present disclosure provides a method for providing a battery for a plurality of different golf carts. Information is provided on dimensions and configurations of battery holders in the plurality of different golf carts. Each golf cart has a battery holder, which has a respective dimension and configuration. The respective dimension and configuration of different golf carts are different. A battery having a battery enclosure with predetermined dimension is provided based on the information on the dimensions and configurations of the battery holders of different golf carts. The battery is the only type of battery and is configured to fit into different battery holders. The battery may be a lithium ion battery.

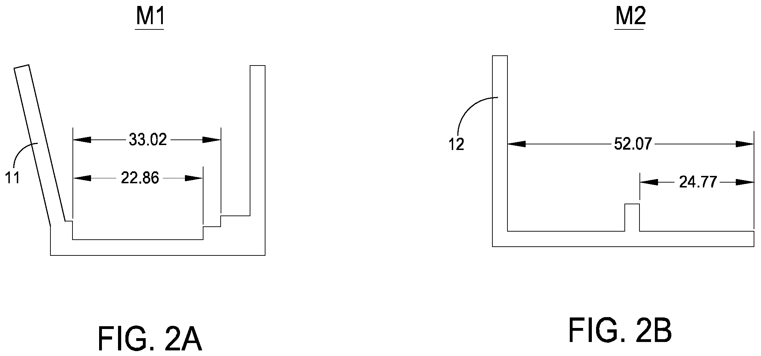

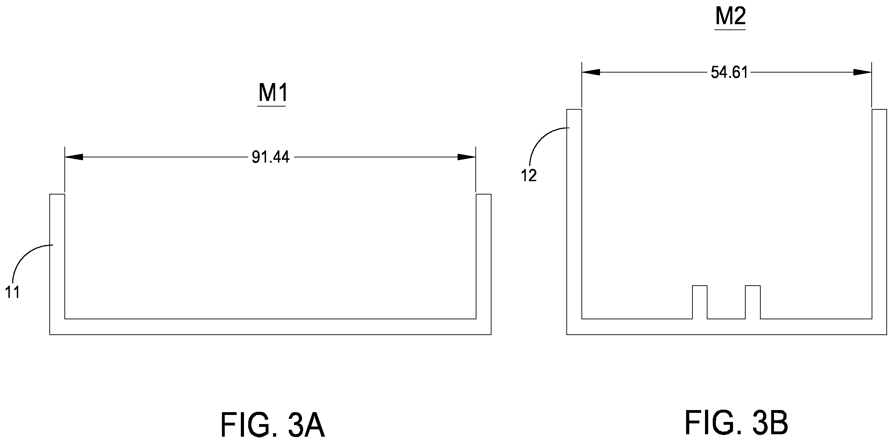

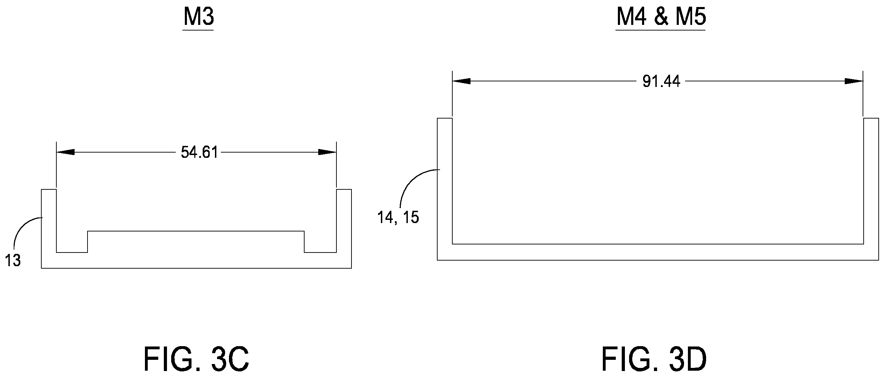

Referring to FIGS. 1A-1E, 2A-2E, and 3A-3D, different exemplary battery holders 11, 12, 13, 14, 15 of five different golf carts are illustrated. The five different golf carts are available from different suppliers, and the respective models are labelled as M1, M2, M3, M4, and M5, respectively, for illustration only. Each battery holder includes a wall 10 defining a chamber configured to accept a battery. The chamber may include an opening from the top or side. These battery holders have different dimensions and configurations, and have different requirements for the dimensions of the batteries. FIGS. 1A-1E illustrate the five exemplary battery holders and the corresponding requirements for a height of a battery. FIGS. 2A-2E illustrate the five exemplary battery holders and the corresponding requirements for a width of a battery. FIGS. 3A-3D illustrate the five exemplary battery holders and the corresponding requirements for a length of a battery. FIG. 3D shows the length requirements for two different golf carts 14, 15. In FIGS. 1A-1E, 2A-2E, and 3A-3D, the dimensions including the length, the width, and the height of each battery holder of a respect golf cart are labeled with values in centimeters (cm).

For the battery holder 11 of the first cart M1, as shown in FIG. 1A, the height limit for a battery including brackets is 31.75 cm. The limits described herein are upper limits for corresponding dimensions. As illustrated in FIG. 2A, the width limit for a battery is 33.02 cm. Alternatively, the width limit for a battery is 22.86 cm if the battery is placed at the bottom of the battery holder because of stepped structures within the battery holder 11. The height limit and the width limit may depend from each other based on the configuration of this cart because of internal steps as illustrated in FIGS. 1A and 2A. For example, if the width of a battery to be installed in this battery holder is less than 22.86 cm, the height limit is 31.75 cm. However, if the width of the battery is greater than 22.86 cm, the height limit is 27.30 cm only. As illustrated in FIG. 3A, the length limit for such a battery to be installed in this cart is 91.44 cm based on the configuration of the battery holder of this cart.

For the battery holder 12 of the second cart M2, as shown in FIG. 1B, the maximum height limit for a battery including brackets is 34.29 cm. The battery holder 12 includes a stud in the middle of the bottom surface, and the stud has a height of 7.62 cm including a bottom wall thickness of 3.81 cm. The height limit for a battery to be installed in the battery holder 12 is 26.67 cm. As another option, the height limit for a battery to be installed in the battery holder 12 is 30.48 cm if a battery has a width less than 24.77 cm to avoid the stub. As illustrated in FIG. 2B, the width limit for a battery is 52.07 cm, or 24.77 cm as another option if the battery is placed at the bottom of the battery holder. As illustrated in FIG. 3B, the length limit for such a battery to be installed in this cart is 54.61 cm based on the configuration of the battery holder of this cart.

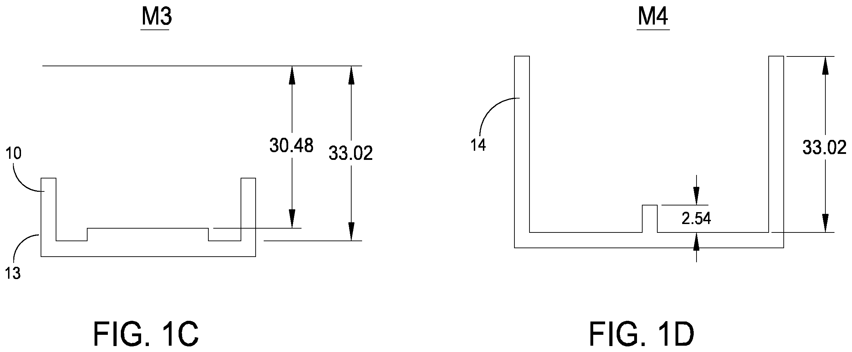

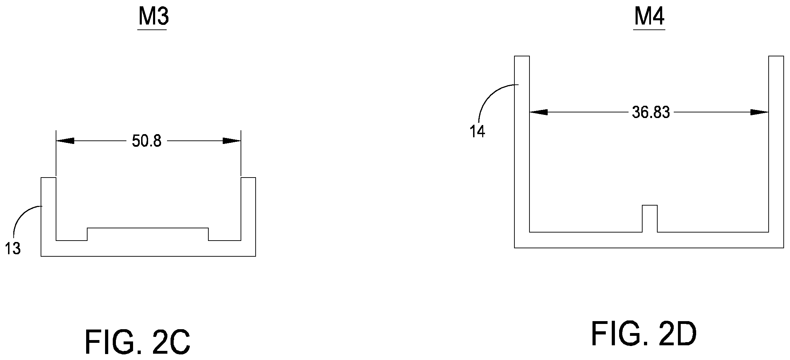

For the battery holder 13 of the third cart M3, as shown in FIG. 1C, the maximum height limit for a battery including brackets is 33.02 cm. The battery holder 12 include a raised portion in the middle of the bottom surface, and the raised portion has a height of 2.54 cm. The height limit for a battery to be installed in the battery holder 13 is 30.38 cm. As illustrated in FIG. 2C, the width limit for a battery is 50.8 cm. As illustrated in FIG. 3C, the length limit for such a battery to be installed in this cart is 54.61 cm based on the configuration of the battery holder of this cart.

For the battery holder 14 of the fourth cart M4, as shown in FIG. 1D, the maximum height limit for a battery including brackets is 33.02 cm. The battery holder 14 include a stud in the middle of the bottom surface, and the stud has a height of 2.54 cm. The height limit for a battery to be installed in the battery holder 14 is 30.48 cm. As another option, the height limit for a battery to be installed in the battery holder 14 is 33.02 cm if a battery has a width narrow enough to avoid the stub. As illustrated in FIG. 2D, the width limit for a battery is 36.83 cm when the battery is disposed above the stud. As illustrated in FIG. 3D, the length limit for such a battery to be installed in this cart is 91.44 cm based on the configuration of the battery holder of this cart.

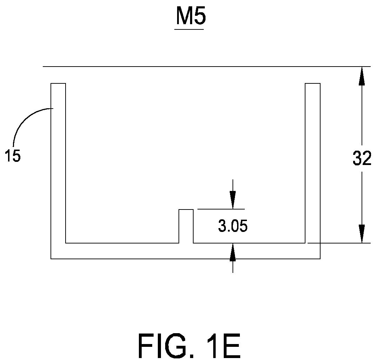

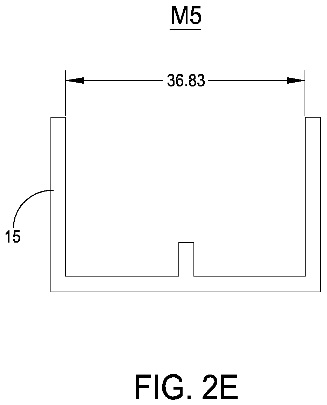

For the battery holder 15 of the fifth cart M5, as shown in FIG. 1E, the maximum height limit for a battery including brackets is 32 cm. The battery holder 15 include a stud in the middle of the bottom surface, and the stud has a height of 3.05 cm. The height limit for a battery to be installed in the battery holder 14 is 28.95 cm. As illustrated in FIG. 2E, the width limit for a battery is 36.83 cm when the battery is disposed above the stud. As illustrated in FIG. 3D, the length limit for such a battery to be installed in this cart is 91.44 cm based on the configuration of the battery holder of this cart.

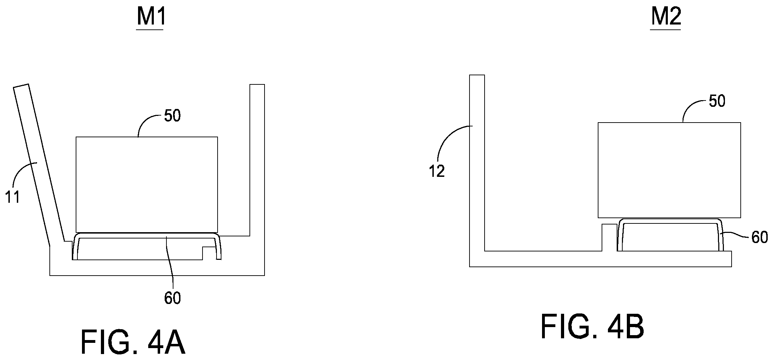

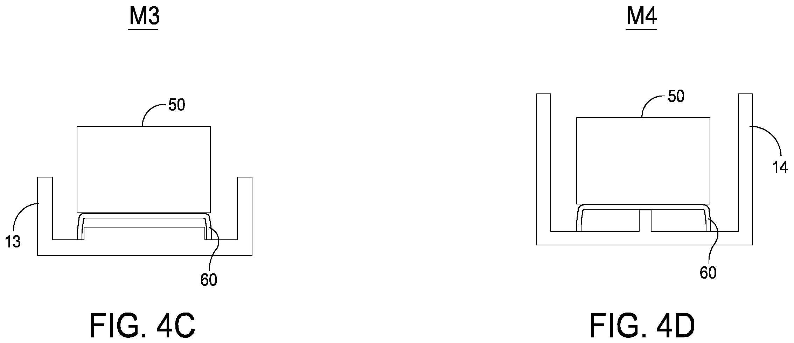

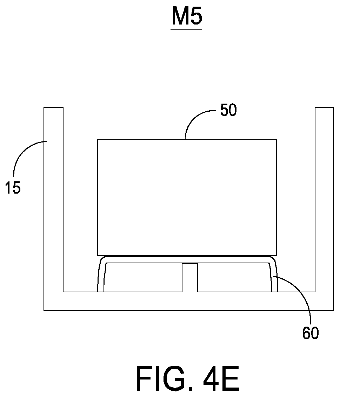

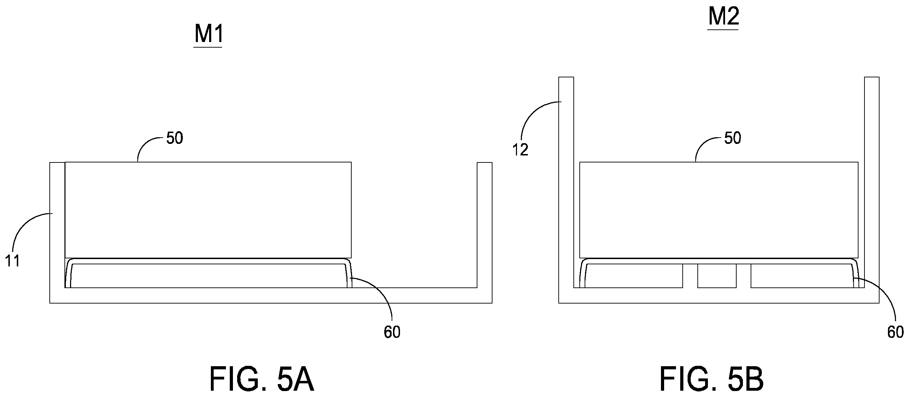

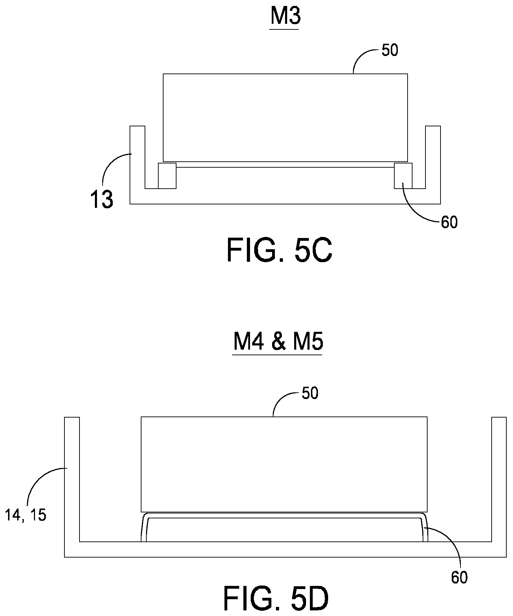

Referring to FIGS. 4A-4E and 5A-5D, an exemplary universal battery 50 in accordance with some embodiment is illustrated. FIGS. 4A-4E illustrate the exemplary battery 50 mounted in the five exemplary battery holders 11, 12, 13, 14, 15 of different golf carts in accordance with some embodiments. FIGS. 4A-4E show the height and the width of the exemplary battery 50. FIGS. 5A-5D illustrate the same exemplary battery 50 mounted in the five exemplary battery holders 11, 12, 13, 14, 15 of different golf carts showing the length of the battery 50. FIG. 5D shows the length of the exemplary battery 50 for two different golf carts including . The exemplary battery 50 is mounted into different battery holders through brackets 60 disposed below the exemplary battery 50. As illustrated in FIGS. 4A-4E and 5A-5D, one same battery 50 are configured to fit into different battery holders of different golf carts. Only one battery is needed. There is no need to make different batteries of different sizes for different battery holders.

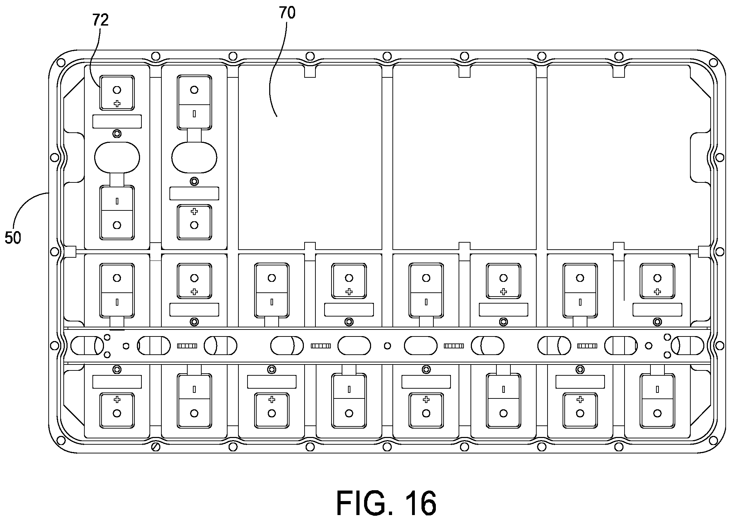

The battery comprises a plurality of battery cells 72 (FIG. 16) disposed inside the battery enclosure 52. In some embodiments, each cell may be a lithium ion battery cell. The plurality of battery cells are connected in series or parallel, and may be aligned in parallel with each other.

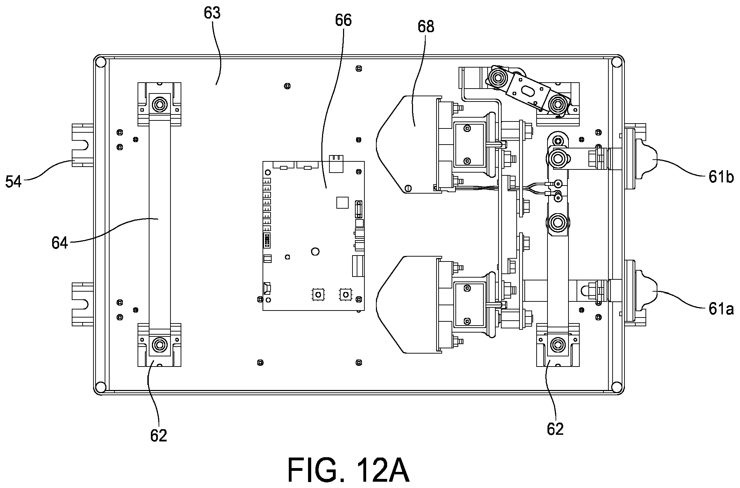

In some embodiments, the battery further comprises a battery management system (BMS) 66 (FIGS. 12A-12B) electronically connected with the plurality of battery cells. The BMS may be disposed inside the battery enclosure and above the plurality of battery cells.

The battery 50 is the only one battery with specific dimensions in accordance with some embodiments. In some embodiments, the height of the battery enclosure 52 is in a range of from 20 cm to 30 cm, the width of the battery enclosure is in a range of from 20.3 cm to 36.8 cm, and the length of the battery enclosure is in a range of from 54.6 cm to 91.4 cm. The dimensions of the battery enclosure 52 are the overall dimensions of the battery 50 in the present disclosure. The dimensions of the battery 50 are selected based on the dimensions of different battery holders of different golf carts, for example, the examples of battery holders 11, 12, 13, 14, and 15 as described herein.

In some embodiments, in one example, the height of the battery enclosure 52 is 28.6 cm, the width of battery is 20.3 cm, and the length of the battery enclosure is 54.6 cm. With a flange, the width of battery is 24.4 cm, and the length of the battery enclosure is 58.6 cm.

In some embodiments, in another example, the height of the battery enclosure 52 is 22.5 cm, the width of battery enclosure is 32.4 cm, and the length of the battery enclosure is 49.0 cm. With a flange, the width of battery enclosure is 36.4 cm, and the length of the battery enclosure is 53.0 cm.

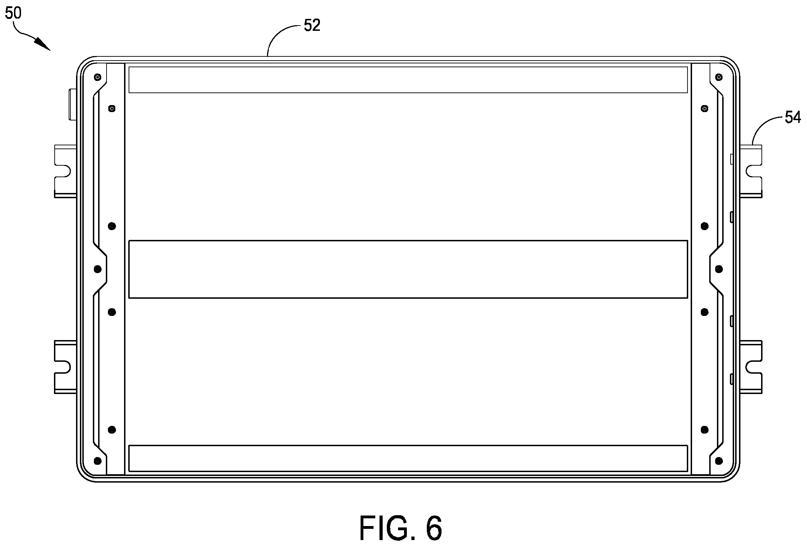

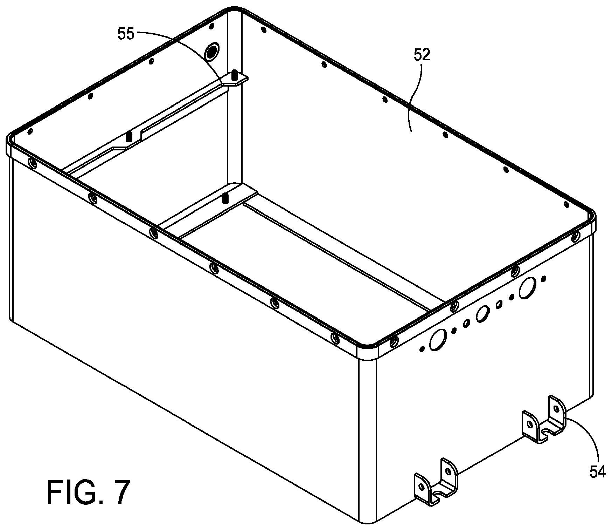

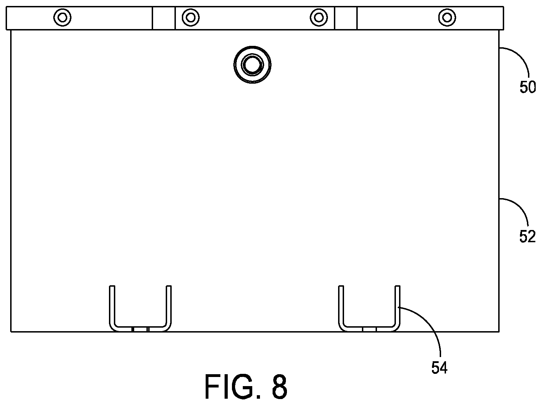

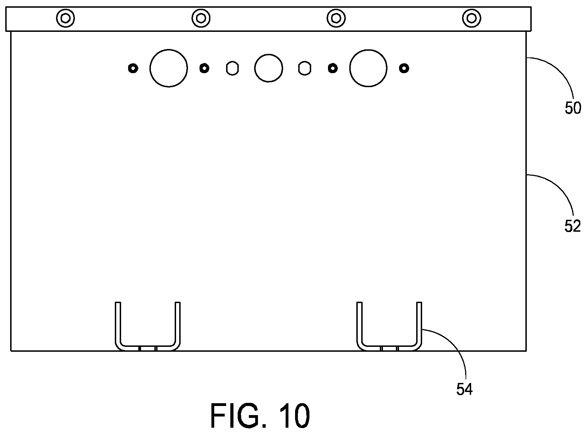

Referring to FIGS. 6-10, an exemplary enclosure 52 of the exemplary battery 50 in accordance with some embodiments is also illustrated. FIG. 6 shows a plan view of the exemplary battery enclosure 52. FIG. 7 is a perspective view. FIGS. 8-10 are plan views illustrating the exemplary battery enclosure of FIG. 6 along a width direction, a length direction, a width direction, respectively, in accordance with some embodiments. FIG. 8 and FIG. 10 show different ends of the exemplary battery enclosure. The battery 50 may comprise mounting feet 54 on the battery enclosure 52.

In some embodiments, the method further comprises providing a set of brackets 60 disposed below the battery enclosure 52. The resulting battery assembly includes the brackets 60. The set of brackets 60 is adjustable to match with fixtures on each battery holder so as to fix the battery in each battery holder. In some embodiments, the mounting feet 54 are so configured so that the battery enclosure 52 can be fixed onto the brackets 60 or directly to a battery holder of a golf cart. For example, each of the mounting feet 54 may define a hole configured to accept a screw to fix the battery enclosure onto a battery holder.

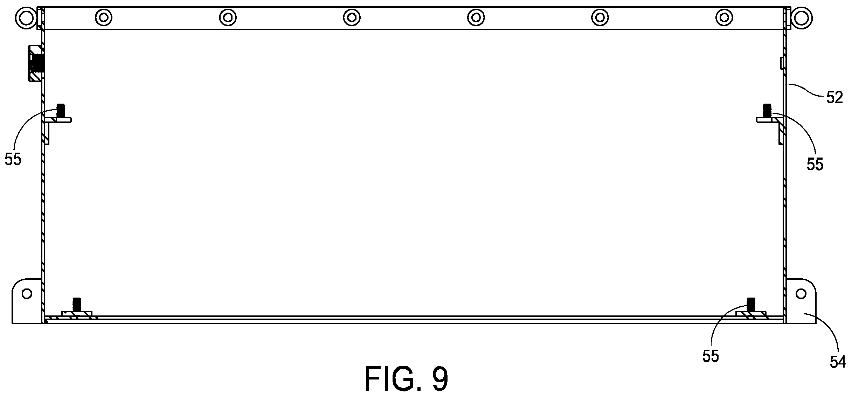

In some embodiments, as illustrated in FIGS. 7 and 9, the battery enclosure 52 may include internal shelves 55 therein, which may be coupled onto an interior wall of the battery enclosure 52. The internal shelves may include fixtures and are configured to fix the battery cells inside the battery enclosure 52.

As also illustrated in FIGS. 7-10, the battery enclosure may also define holes on at least one of its walls so that wires are connected with the battery cells so as to provide electricity to power a respective golf cart.

The battery enclosure 52 may be made of any suitable material. In some embodiments, the battery enclosure is made of sheet metals or a plastics.

The battery enclosure 52 optionally comprises a transparent top cover 58. The battery components inside the enclosure can be seen from the top cover. A pair of handles 56 may be disposed on the top cover 58.

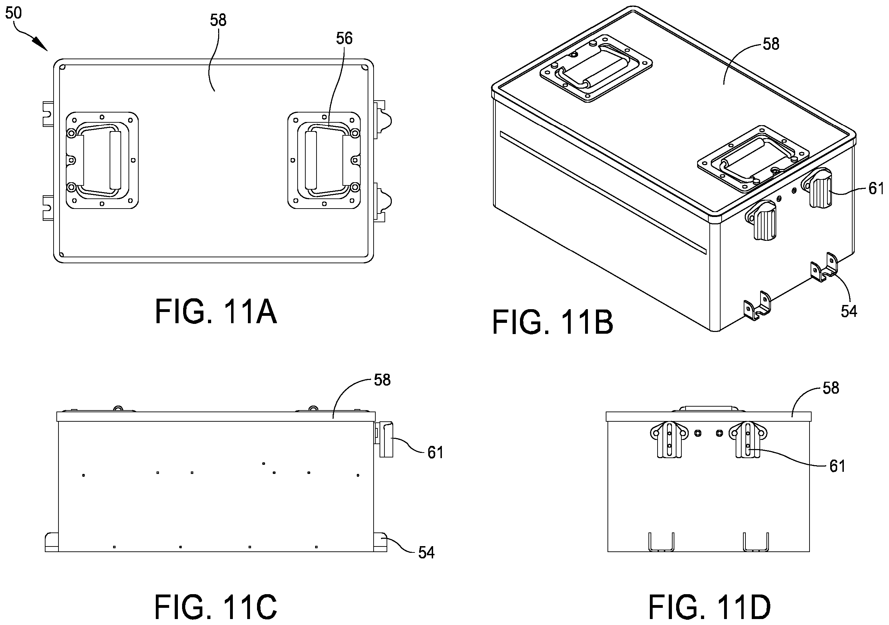

Referring to FIGS. 11A-11D, 12A-12B, and 13A-13B, an exemplary battery enclosure 52 are made of a sheet metal and has a transparent top cover 58 in accordance with some embodiments. The walls of the exemplary battery enclosure 52 except the transparent cover are made of a sheet metal. As illustrated in FIGS. 11A-11B, a pair of handles 56 are disposed on the top cover 58. The handles 56 are configured to be open and separate the top cover 58 from other components of the battery enclosure 52. The handles are also configured to be used by an operator to carry the battery unit including the battery enclosure 52 onto or away from the battery holder of a golf cart.

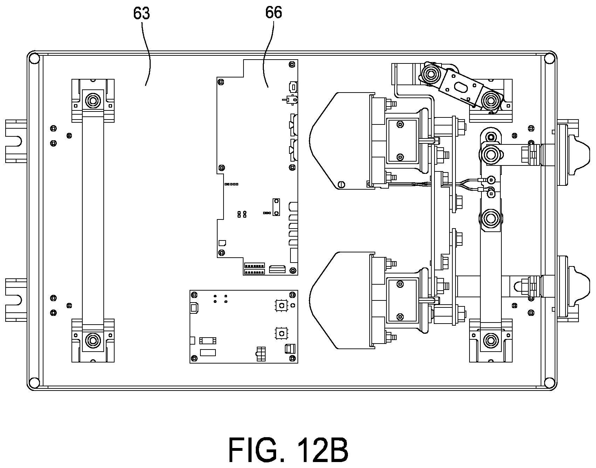

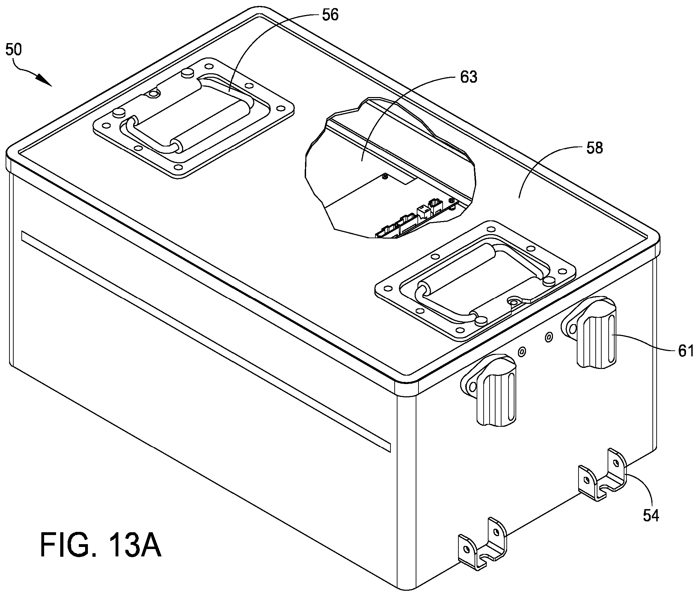

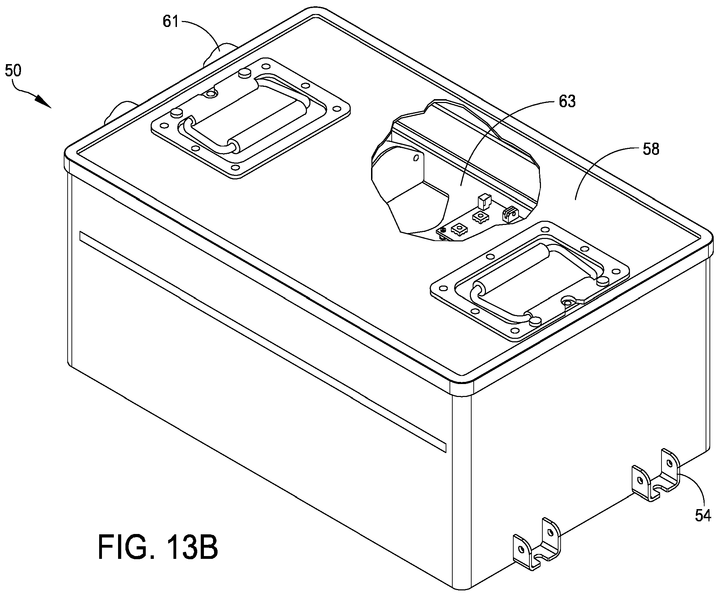

FIGS. 12A-12B are top plan view illustrating the components inside the exemplary battery enclosure of FIGS. 11A-11D, without the cover or with a transparent top cover 58. FIGS. 13A-13B are perspective views illustrating the exemplary battery of FIGS. 11A-11D with a transparent top cover 58. Two external terminals 61 of the battery 50 are disposed on a side of the battery enclosure 52, and are connected with internal terminals 62. The battery cells are connected with electrical connections 64. The battery also comprises a battery management system (BMS) 66 connected with the battery cells. Insulation materials 68 may also be included inside the battery. These components such as the terminals 62, electrical connections 64, and the BMS may be disposed on a substrate 63, which is disposed above the battery cells. The structures illustrated in FIGS. 12A and 12B are similar, except minor differences in the shapes or the configurations of the BMS.

FIGS. 13A-13B are perspective views illustrating such an exemplary battery 50 including battery enclosure 52 and a transparent top cover 58, along the length direction and from two angles.

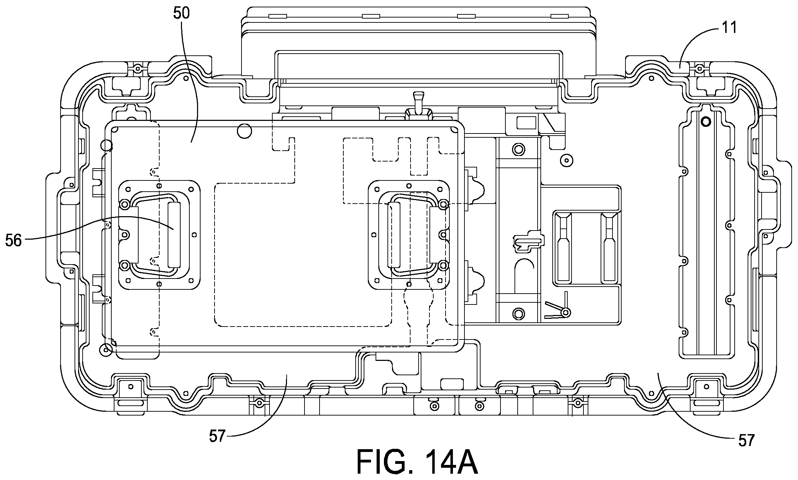

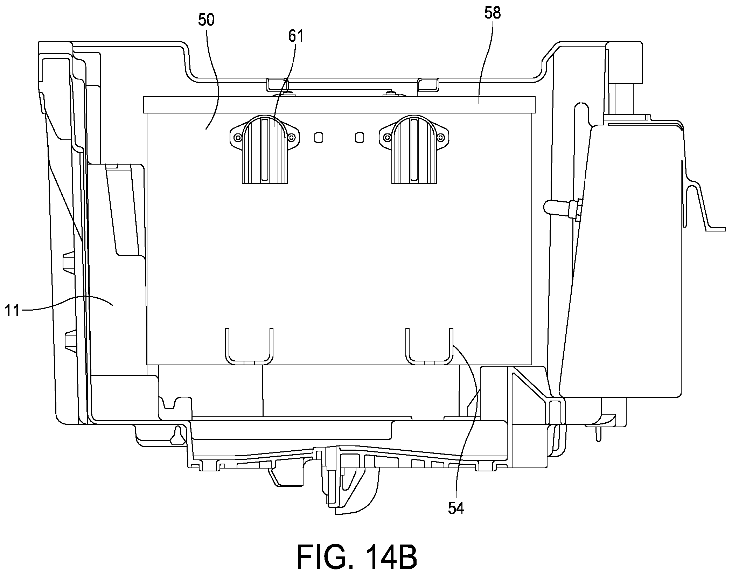

FIGS. 14A-14B are top plan view and side plan views illustrating the exemplary battery of FIGS. 11A-11D installed in the first exemplary battery holder 11. The battery 50 is smaller than the internal chamber of the battery holder 11, as also illustrated in FIG. 5A. Additional panels or materials 57 may be used to cover some gaps between the battery and the walls of the battery holder 11. As illustrated in FIG. 14B, the battery 50 includes mounting feet 54 and two external terminals 61 on a side surface of the battery enclosure 52.

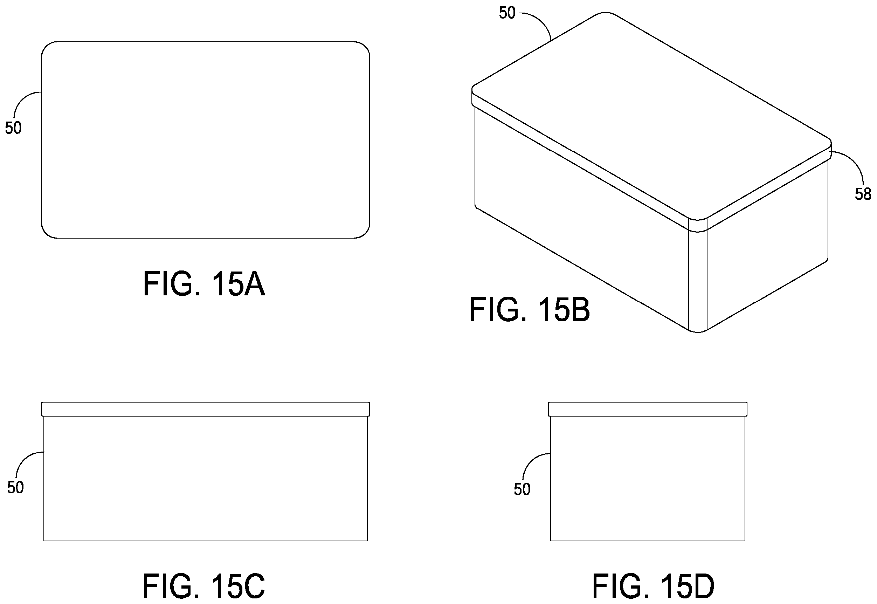

FIG. 15A-15D illustrate an exemplary battery enclosure made of a plastics material in accordance with some embodiments. The top cover 58 may be made of a transparent plastic material. FIG. 16 is a plan view illustrating the configuration of battery cells inside the exemplary battery enclosure of FIGS. 15A-15D in accordance with some embodiments.

As illustrated in FIG. 16, the battery 50 comprises a plurality of sections 70, each of which includes a plurality of battery cells 72, disposed inside the battery enclosure 52. In some embodiments, each cell may be a lithium ion battery cell. The plurality of battery cells are connected in series or parallel, and may be aligned in parallel with each other.

In another aspect, the present disclosure provides a battery assembly for a plurality of different golf carts. The battery assembly comprises a battery, which comprises a battery enclosure, and a plurality of battery cells disposed inside the battery enclosure. Each of the plurality of different golf carts has a battery holder and each battery holder has a respective dimension and configuration. The battery is the only one battery and is configured to fit into each battery holder in the plurality of different golf carts. The battery enclosure has predetermined dimensions including a length, a width, and a height.

In some embodiments, the battery is a lithium ion battery. The plurality of battery cells are connected in series or parallel, and may be aligned in parallel with each other.

In some embodiments, the battery assembly further comprises a battery management system electronically connected with the plurality of battery cells.

In some embodiments, the battery assembly further comprises a set of brackets disposed below the battery enclosure. The set of bracket is adjustable to match with fixtures on each battery holder so as to fix the battery in each battery holder.

**In** some embodiments, the height of the battery enclosure is in a range of from 20 cm to 30 cm, the width of the battery enclosure is in a range of from 20.3 cm to 36.8 cm, and the length of the battery enclosure is in a range of from 54.6 cm to 91.4 cm.

**In** one example, the height of the battery enclosure is 28.6 cm, the width of battery enclosure is 20.3 cm, and the length of the battery enclosure is 54.6 cm. With a flange, the width of battery enclosure is 24.4 cm, and the length of the battery enclosure is 58.6 cm.

**In** another example, the height of the battery enclosure is 22.5 cm, the width of battery enclosure is 32.4 cm, and the length of the battery enclosure is 49.0 cm. With a flange, the width of battery enclosure is 36.4 cm, and the length of the battery enclosure is 53.0 cm.

**In** some embodiments, the battery enclosure is made of sheet metals or a plastics, and optionally comprises a transparent top cover as described herein.

In some embodiments, the battery is a 48V lithium battery, which is lithium-ion-phosphate based. The nominal capacity is 106 Ah.

In another aspect, the present disclosure provides a method of making the battery assembly as described herein. Such a method includes steps of providing or making each component, and assembling them together.

In another aspect, the present disclosure also provides the methods of using the battery assembly as described herein. The method of using the battery assembly comprises installing the battery into a battery holder in a golf cart.

The battery as described herein may have any suitable voltage and/or capacity. For example, in some embodiments, the battery is a 48V lithium-ion battery.

Although the subject matter has been described in terms of exemplary embodiments, it is not limited thereto. Rather, the appended claims should be construed broadly, to include other variants and embodiments, which may be made by those skilled in the art.

## Claims

1. A method for providing a battery (50) for a plurality of different golf carts (M1, M2, M3, M4, M5), comprising: providing information on dimensions and configurations of battery holders (11, 12, 13, 14, 15) in the plurality of different golf carts (M1, M2, M3, M4, M5), wherein each of the plurality of different golf carts (M1, M2, M3, M4, M5) has a battery holder (11, 12, 13, 14, 15) and each battery holder (11, 12, 13, 14, 15) has a respective dimension and configuration; and
providing a battery (50) having a battery enclosure (52) with a predetermined dimension including a length, a width, and a height based on the information on the dimensions and configurations of the battery holders (11, 12, 13, 14, 15) of the plurality of different golf carts (M1, M2, M3, M4, M5), wherein the battery (50) is the only one battery (50) and is configured to fit into each battery holder (11, 12, 13, 14, 15) in the plurality of different golf carts (M1, M2, M3, M4, M5).

2. The method of claim 1, wherein the battery (50) is a lithium ion battery and comprises a plurality of battery cells (72) disposed inside the battery enclosure (52), preferably wherein the plurality of battery cells (72) are connected in series or parallel, and are aligned in parallel with each other; and/or wherein the battery (50) further comprises a battery management system (66) electronically connected with the plurality of battery cells (72).

3. The method of claim 1 or 2, wherein the height of the battery enclosure (52) is in a range of from 20 cm to 30 cm, the width of the battery enclosure (52) is in a range of from 20.3 cm to 36.8 cm, and/or the length of the battery enclosure (52) is in a range of from 54.6 cm to 91.4 cm.

4. The method of any one of the preceding claims, wherein the height of the battery enclosure (52) is 28.6 cm, the width of battery enclosure (52) is 20.3 cm, and/or the length of the battery enclosure (52) is 54.6 cm, preferably wherein with a flange, the width of battery enclosure (52) is 24.4 cm, and/or the length of the battery enclosure (52) is 58.6 cm.

5. The method of any one of claims 1 to 3, wherein the height of the battery enclosure (52) is 22.5 cm, the width of battery enclosure (52) is 32.4 cm, and/or the length of the battery enclosure (52) is 49.0 cm, preferably wherein with a flange, the width of battery enclosure (52) is 36.4 cm, and/or the length of the battery enclosure (52) is 53.0 cm.

6. The method of any one of the preceding claims, further comprising providing a set of brackets (60) disposed below the battery enclosure (52), the set of brackets (60) being adjustable to match with fixtures on each battery holder (11, 12, 13, 14, 15) so as to fix the battery (50) in each battery holder (11, 12, 13, 14, 15).

7. The method of any one of the preceding claims, wherein the battery enclosure (52) is made of sheet metals or a plastics, and optionally comprises a transparent top cover (58).

8. A battery assembly for a plurality of different golf carts (M1, M2, M3, M4, M5), comprising a battery (50) comprising:
a battery enclosure (52);
a plurality of battery cells (72) disposed inside the battery enclosure (52);
wherein
each of the plurality of different golf carts (M1, M2, M3, M4, M5) has a battery holder (11, 12, 13, 14, 15) and each battery holder (11, 12, 13, 14, 15) has a respective dimension and configuration,
the battery (50) is the only one battery (50) and is configured to fit into each battery holder (11, 12, 13, 14, 15) in the plurality of different golf carts (M1, M2, M3, M4, M5), and
the battery enclosure (52) has a predetermined dimension including a length, a width, and a height.

9. The battery assembly of claim 8, wherein the battery (50) is a lithium ion battery, and/or wherein the plurality of battery cells (72) are connected in series or parallel, and are aligned in parallel with each other, and/or wherein the battery enclosure (52) is made of sheet metals or a plastics, and optionally comprises a transparent top cover (58).

10. The battery assembly of claim 8 or 9, further comprising a battery management system (66) electronically connected with the plurality of battery cells (72), and/or further comprising a set of brackets (60) disposed below the battery enclosure (52), the set of brackets (60) being adjustable to match with fixtures on each battery holder (11, 12, 13, 14, 15) so as to fix the battery (50) in each battery holder (11, 12, 13, 14, 15).

11. The battery assembly of any one of claims 8 to 10, wherein the height of the battery enclosure (52) is in a range of from 20 cm to 30 cm, the width of the battery enclosure (52) is in a range of from 20.3 cm to 36.8 cm, and/or the length of the battery enclosure (52) is in a range of from 54.6 cm to 91.4 cm.

12. The battery assembly of any one of claims 8 to 11, wherein the height of the battery enclosure (52) is 28.6 cm, the width of battery enclosure (52) is 20.3 cm, and/or the length of the battery enclosure (52) is 54.6 cm, preferably wherein with a flange, the width of battery enclosure (52) is 24.4 cm, and/or the length of the battery enclosure (52) is 58.6 cm.

13. The battery assembly of any one of claims 8 to 11, wherein the height of the battery enclosure (52) is 22.5 cm, the width of battery enclosure (52) is 32.4 cm, and/or the length of the battery enclosure (52) is 49.0 cm preferably wherein with a flange, the width of battery enclosure (52) is 36.4 cm, and/or the length of the battery enclosure (52) is 53.0 cm.

14. A method of making the battery assembly of any one of claims 8 to 13, comprising steps of providing components and assembling the components together, preferably wherein the components at least comprise the battery.

15. A method of using the battery assembly of any one of claims 8 to 13, comprising installing the battery (50) into a battery holder (11, 12, 13, 14, 15) in a golf cart (M1, M2, M3, M4, M5).
